# EUROPÄISCHE PATENTANMELDUNG

(11) **EP 1 544 023 A2**
(43) Veröffentlichungstag der Anmeldung: **22.06.2005**
(21) Anmeldenummer: 04106234.0
(22) Anmeldetag: 02.12.2004
(51) Int. Cl.: B60K 37/06

(54) **Schaltermodul**

(30) Priorität: 18.12.2003 DE 10361343
(71) Anmelder: Valeo Schalter und Sensoren GmbH, 74321 Bietigheim-Bissingen (DE)
(72) Erfinder: Staude, Sascha, 74321 Bietigheim-Bissingen (DE); Tornar, Roland, 86653 Mohnheim (DE); Werz, Martin, 74182 Obersulm (DE)
(74) Vertreter: Croonenbroek, Thomas

(57) **Zusammenfassung**

Die Erfindung betrifft ein Schaltermodul, insbesondere für eine Verwendung in Kraftfahrzeugen, mit mindestens einem Schalter und/oder Anzeigeelement, wobei der Schalter und/oder das Anzeigeelement mindestens eine Speichereinheit mit spezifischen Daten aufweist und dass zur Identifizierung des Schalters und/oder des Anzeigeelements eine Leseeinheit vorgesehen ist, mit der die Daten aus der Speichereinheit auslesbar sind.

Die Erfindung betrifft auch einen Schalter, ein Anzeigeelement, eine Leseeinheit sowie ein Trägerbauteil für eine Verwendung in einem Schaltermodul.

Die Erfindung betrifft ferner Verfahren zur Herstellung eines Schaltermoduls.

## Beschreibung

Die Erfindung betrifft ein Schaltermodul, insbesondere für eine Verwendung in Kraftfahrzeugen, mit mindestens einem Schalter und/oder einem Anzeigeelement.

Derartige Schaltermodule können in Kraftfahrzeuge, beispielsweise in einen Armaturenträger eingebaut werden, um einer Bedienperson die Steuerung verschiedener Funktionen zu ermöglichen. Dabei kann jedem Schalter eine bestimmte Funktion zugewiesen sein, wie beispielsweise Warnblinkanlage, Defroster, Heckrollo etc. Durch ein Anzeigeelement können bestimmte Betriebszustände des Kraftfahrzeugs visualisiert werden, bspw. der Belegungszustand eines Sitzes.

Im Kraftfahrzeugbau besteht eine erhöhter Bedarf nach einer Individualisierung eines Kraftfahrzeugs. So können verschiedene Optionen oder Ausstattungspakete geordert werden, um das Kraftfahrzeug an die Wünsche eines Kunden anpassen zu können. Dabei bedingt eine erhöhte Anzahl von zur Verfügung stehenden Ausstattungsoptionen eine unüberschaubare Kombinationsvielfalt verschiedener Ausstattungsoptionen. Für die Montage eines Kraftfahrzeugs ergeben sich daraus erhebliche Schwierigkeiten. So ist die Produktionslogistik sehr komplex, wenn eine Vielzahl von unterschiedlich gestalteten Schaltermodulen bereit gestellt werden müssen, um allen Ausstattungswünschen bzw. allen Kombinationen von Ausstattungswünschen Rechnung tragen zu können.

Es besteht die Möglichkeit, programmierbare Schaltermodule zu verwenden, wobei die Zuweisung der Funktion eines Schalters oder eines Anzeigeelements durch die Programmierung des Schaltermoduls erfolgt. Dies hat jedoch den Nachteil, dass die Programmierung zeitaufwendig und fehleranfällig ist und auch eine Wartung oder Reparatur nur mit Hilfe spezieller Programmiergeräte möglich ist.

Hiervon ausgehend liegt der Erfindung die Aufgabe zugrunde, ein Schaltermodul bereit zu stellen, dass ähnlich flexibel wie ein programmierbares Schaltermodul einsetzbar ist, jedoch eine erhöhte Zuverlässigkeit aufweist.

Dies Aufgabe wird erfindungsgemäß dadurch gelöst, dass der Schalter und/oder das Anzeigeelement mindestens eine Speichereinheit mit spezifischen Daten aufweist und dass zur Identifizierung des Schalters und/oder des Anzeigeelements eine Leseeinheit vorgesehen ist, mit der die Daten aus der Speichereinheit auslesbar sind.

Die in der Speichereinheit abgelegten, spezifischen Daten eines Schalters und/oder eines Anzeigeelements können durch eine zugeordnete Leseeinheit ausgelesen werden. Die Information, um welchen Schalter oder welches Anzeigeelement es sich handelt, geht nicht, wie im Stand der Technik üblich, aus einer extern abgelegten Zuordnungsvorschrift hervor, sondern ist direkt in der Speichereinheit eines Schalters bzw. eines Anzeigeelements abgelegt. Dies ermöglicht eine besonders einfache und flexible Bestückung eines Schaltermoduls mit mehreren Schaltern und/oder Anzeigeelementen. Dabei muss die Funktion eines Schalters oder Anzeigeelements nicht nachträglich durch eine Programmierung zugewiesen werden, sondern ist in den Schalter- bzw. anzeigeelementspezifischen Daten einer dem Schalter bzw. dem Anzeigeelement zugeordneten Speichereinheit bereits abgelegt.

Vorteilhafterweise ist für die Leseeinheit ein Trägerbauteil vorgesehen, das bspw. als Leiterplatte ausgebildet sein kann.

Auf dem Trägerbauteil kann pro Schalter oder Anzeigeelement jeweils eine Leseeinheit vorgesehen sein.

Der Schalter oder das Anzeigeelement kann direkt an dem Trägerbauteil montierbar sein oder an einer separaten Halterung. Somit kann entweder ein Schaltermodul mit Leiterplatte und Schalter und/oder Anzeigeelement der Montage eines Kraftfahrzeugs zugeführt werden, oder die genannten Bauteile können dem Kraftfahrzeug separat zugeführt werden. Als Halterung kommt beispielsweise ein Rahmen oder eine Blende in Betracht.

Die Speichereinheit kann bspw. als EEPROM, auch E²PROM genannt, ausgebildet sein. Diese Speicher können an einem.Schalter oder Anzeigeelement angeordnet werden. Das Einspielen von schalter- bzw. anzeigeelementspezifischen Daten kann vor oder nach der Anordnung der Speichereinheit am Schalter oder Anzeigeelement erfolgen.

Der Schalter kann beispielsweise als Drucktaster, Kippschalter, Wechsler, Drehschalter oder Drehregler ausgebildet sein. Diese können zwei oder mehrere definierte Schaltlagen haben. Die Schaltlagen können auch beliebig zwischen zwei Endlagen vorgesehen sein, bspw. bei der Verwendung eines Drehreglers für einen stufenlos einstellbaren Verbraucher. Ein solcher Verbraucher kann eine Sitzheizung sein.

Der Schalter oder das Anzeigeelement kann eine Beschriftung und/oder, Symbolik aufweisen. Diese Beschriftung oder Symbolik kann als 'Zusatzelement oder in einen Schalter oder ein Anzeigeelement bereits integriert vorgesehen sein. Entsprechend kann für den Schalter oder das Anzeigeelement eine Beleuchtung vorgesehen sein, die beispielsweise die Beschriftung und/oder Symbolik hinterleuchtet. Die Beleuchtung kann im Schalter oder Anzeigeelement selbst oder auf dem Trägerbauteil angeordnet sein.

Nach einer Ausführungsform der Erfindung ist bei Verwendung eines Schalters ein schalterinternes Kontaktsystem vorgesehen sein. Dies bedeutet, dass das Kontaktsystem, durch das ein elektrischer Kontakt hergestellt oder unterbrochen wird, innerhalb des Schalters angeordnet ist. Dieses Kontaktsystem ist über geeignete Kontaktmittel dauerhaft elektrisch mit nachgeschalteten Leitungen verbunden.

Alternativ kann auch ein schalterexternes Kontaktsystem vorgesehen sein. Hierbei ist das Kontaktsystem außerhalb des Schalters angeordnet, wobei der Schalter nur in bestimmten Schaltzuständen mit zugeordneten Kontaktmitteln in elektrischer Verbindung steht. Die Kontaktmittel können beispielsweise als Kontaktpunkte ausgebildet sein.

Vorteilhafterweise ist die Leseeinheit als Slave ausgebildet, der über ein Bussystem mit einer Mastereinheit kommuniziert. Das Bussystem kann entsprechend dem LIN- oder dem CAN-Standard aufgebaut sein. Dabei kann für mehrere, bspw. für drei Schalter ein gemeinsamer Slave vorgesehen sein.

Die Erfindung betrifft auch einen Schalter, ein Anzeigeelement, eine Leseeinheit sowie ein Trägerbauteil für eine Verwendung in einem Schaltermodul.

Die Erfindung betrifft außerdem ein Verfahren zur Herstellung eines Schaltermoduls, bei dem eine Leseeinheit sowie ein Schalter oder ein Anzeigeelement mit einer Speichereinheit mit spezifischen Daten bereitgestellt werden, der Schalter oder das Anzeigeelement relativ zur Leseeinheit positioniert wird und der Schalter oder das Anzeigeelement mit Hilfe der Leseeinheit durch Auslesen der Daten der Speichereinheit identifiziert wird.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine schematische Darstellung eines Schaltermoduls mit drei Slaves mit jeweils drei Schaltern;
- Figur 2: eine perspektivische Ansicht einer ersten Ausführungsform eines der Slaves gemäß Figur 1; und
- Figur 3: eine perspektivische Ansicht einer zweiten Ausführungsform eines der Slaves gemäß Figur 1.

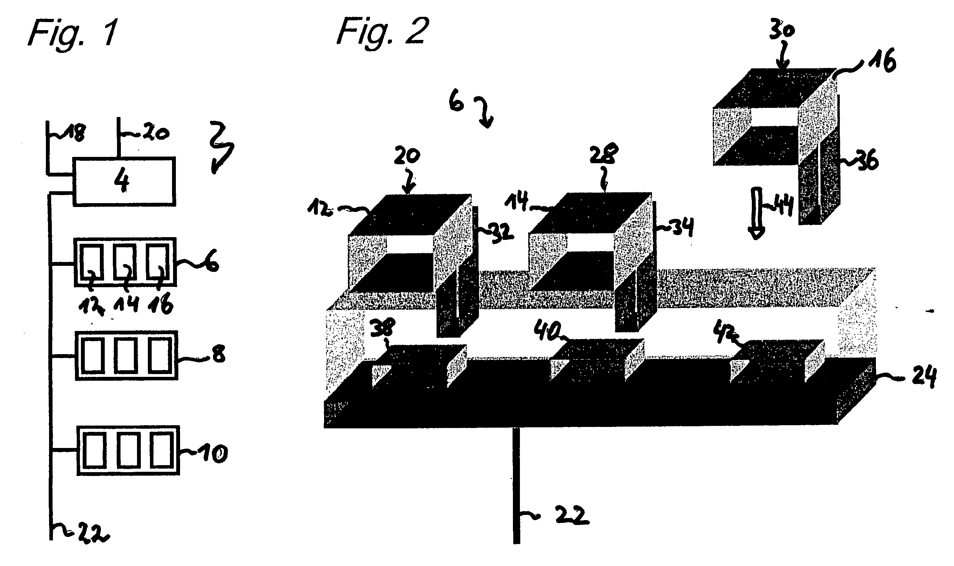

Das in Figur 1 dargestellte Schaltermodul ist insgesamt mit dem Bezugszeichen 2 bezeichnet. Es weist im Wesentlichen eine Mastereinheit 4 und drei Slaves 6, 8 und 10 auf, die jeweils mit drei Schaltern versehen sind, so bspw. der Slave 6 mit den Schaltern 12, 14 und 16.

Die Mastereinheit 4 steht mit einem symbolisch als Leitung 18 dargestellten CAN-Bus in Verbindung. Die Mastereinheit 2 verfügt außerdem über einen Starkstromausgang 20 für nachgeschaltete Verbraucher.

Die Mastereinheit 4 kommuniziert außerdem mit einem symbolisch durch eine Leitung 22 dargestellten LIN-Bus mit den Slaves 6, 8 und 10.

In Figur 2 ist der Slave 6 in einer ersten Ausführungsform perspektivisch und schematisch dargestellt. Dieser weist ein Trägerbauteil 24 zur Anordnung der Schalter 12, 14 und 16 auf. Diese weisen jeweils eine einer Bedienperson zugewandte Fläche 26, 28 bzw. 30 für eine Beschriftung und/oder Symbolik auf.

Die Schalter 12, 14 und 16 weisen jeweils eine schalterspezifische, als EEPROM ausgebildete Speichereinheit 32, 34, 36 auf. Den Schaltern 12, 14 und 16 sind jeweils auf dem Trägerbauteil angeordnete Kontaktsysteme 38, 40 und 42 zugeordnet.

Der Schalter 16 ist in Figur 2 in einem Vormontagezustand dargestellt. Wenn der Schalter 16 in mit 44 bezeichneter Fügerichtung auf das Trägerbauteil 24 gesetzt wird, kann die Speichereinheit 36 durch den Slave 6 erstmalig ausgelesen werden. Die Daten können über den LIN-Bus 22 an die Mastereinheit 4 kommuniziert werden.

Die Schalter 12 und 14 sind in Figur 2 in ihrem Fertigmontagezustand dargestellt. Wenn der Schalter 16 entsprechend montiert ist, kann durch Betätigen des Schalters 16 das zugeordnete Kontaktsystem 42 betätigt werden. Über den LIN-Bus 22 kann von der Mastereinheit 4 der Schaltzustand des Kontaktsystems 42 abgefragt werden.

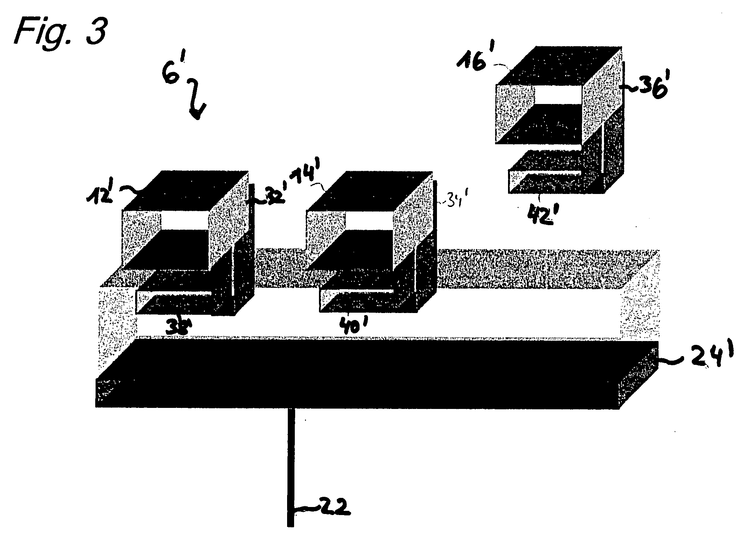

Der in Figur 3 dargestellte Slave 6' ist dem in Figur 2 dargestellten Slave 6 ähnlich. Die Kontaktsysteme 38', 40' und 42' des Slaves 6' sind jedoch nicht auf dem Trägerbauteil 24', sondern an den Schaltern 12', 14' und 16' angeordnet. Die Kontaktsysteme 38', 40' und 42' wiederum stehen über nicht dargestellte Kontaktmittel mit dem Trägerbauteil 24' des Slaves 6' in elektrischer Verbindung.

## Patentansprüche

1. Schaltermodul (2), insbesondere für eine Verwendung in Kraftfahrzeugen, mit mindestens einem Schalter (12, 14, 16) und/oder Anzeigeelement, **dadurch gekennzeichnet, dass** der Schalter (12, 14, 16) und/oder das Anzeigeelement mindestens eine Speichereinheit (32, 34, 36) mit spezifischen Daten aufweist und dass zur Identifizierung des Schalters (12, 14, 16) und/oder des Anzeigeelements eine Leseeinheit (6, 8, 10) vorgesehen ist, mit der die Daten aus der Speichereinheit (32, 34, 36) auslesbar sind.

2. Schaltermodul (2) nach Anspruch 1, **dadurch gekennzeichnet, dass** ein Trägerbauteil (24) für die Leseeinheit (6, 8, 10) vorgesehen ist.

3. Schaltermodul (2) nach Anspruch 2, **dadurch gekennzeichnet, dass** das Trägerbauteil (24) als Leiterplatte ausgebildet ist.

4. Schaltermodul (2) nach Anspruch 2 oder 3, **dadurch gekennzeichnet, dass** der Schalter (12, 14, 16) und/oder das Anzeigeelement an dem Trägerbauteil (24) montierbar ist bzw. sind.

5. Schaltermodul (2) nach mindestens einem der vorhergehenden Ansprüche, **dadurch gekennzeichnet, dass** eine Halterung vorgesehen ist, in oder an der den Schalter (12, 14, 16) und/oder das Anzeigeelement montierbar ist bzw. sind.

6. Schaltermodul (2) nach mindestens einem der vorhergehenden Ansprüche, **dadurch gekennzeichnet, dass** die Speichereinheit (32, 34, 36) als EEPROM ausgebildet ist.

7. Schaltermodul (2) nach mindestens einem der vorhergehenden Ansprüche, **dadurch gekennzeichnet, dass** der Schalter (12, 14, 16) als Drucktaster, Kippschalter, Wechsler, Drehschalter oder Drehregler ausgebildet ist.

8. Schaltermodul (2) nach mindestens einem der vorhergehenden Ansprüche, **dadurch gekennzeichnet, dass** das der Schalter (12, 14, 16) oder das Anzeigeelement eine Beschriftung und/oder Symbolik aufweist.

9. Schaltermodul (2) nach mindestens einem der vorhergehenden Ansprüche, **dadurch gekennzeichnet, dass** eine Beleuchtung für den Schalter (12, 14, 16) und/oder das Anzeigeelement vorgesehen ist.

10. Schaltermodul (2) nach Anspruch 9, **dadurch gekennzeichnet, dass** die Beleuchtung auf dem Trägerbauteil (24) angeordnet ist.

11. Schaltermodul (2) nach Anspruch 9 oder 10, **dadurch gekennzeichnet, dass** die Beleuchtung im Schalter (12, 14, 16) oder Anzeigeelement angeordnet ist.

12. Schaltermodul (2) nach mindestens einem der vorhergehenden Ansprüche, **dadurch gekennzeichnet, dass** ein schalterinternes Kontaktsystem (38', 40', 42') vorgesehen ist.

13. Schaltermodul (2) nach mindestens einem der vorhergehenden Ansprüche, **dadurch gekennzeichnet, dass** ein schalterexternes Kontaktsystem (38, 40, 42) vorgesehen ist.

14. Schaltermodul (2) nach mindestens einem der vorhergehenden Ansprüche, **dadurch gekennzeichnet, dass** die Leseeinheit (6, 8, 10) als Slave ausgebildet ist, der über ein Bussystem (22) mit einer Mastereinheit (4) kommuniziert.

15. Schaltermodul (2) nach Anspruch 14, **dadurch gekennzeichnet, dass** für mehrere Schalter (12, 14, 16) ein Slave vorgesehen ist.

16. Schalter (12, 14, 16) für eine Verwendung für ein Schaltermodul (2) nach einem der vorhergehenden Ansprüche, mit mindestens einer Speichereinheit (32, 34, 36) mit schalterspezifischen Daten, die durch eine Leseeinheit (6, 8, 10) eines Schaltermoduls (2) zur Identifizierung des Schalters (12, 14, 16) auslesbar sind.

17. Anzeigeelement für eine Verwendung für ein Schaltermodul (2) nach einem der Ansprüche I bis 15, mit mindestens einer Speichereinheit (32, 34, 36) mit anzeigeelementspezifischen Daten, die durch eine Leseeinheit (6, 8, 10) eines Schaltermoduls (2) zur Identifizierung des Anzeigeelements auslesbar sind.

18. Leseeinheit (6, 8, 10) für eine Verwendung für ein Schaltermodul (2) nach einem der Ansprüche I bis 15, **dadurch gekennzeichnet, dass** sie dafür vorgesehen ist, Daten aus der Speichereinheit (32, 34, 36) eines Schalters (12, 14, 16) und/oder eines Anzeigeelements zur Identifizierung des Schalters (12, 14, 16) und/oder des Anzeigeelements auszulesen.

19. Trägerbauteil (24) zur Aufnahme eines Schalters (12, 14, 16) nach Anspruch 16 und/oder eines Anzeigeelements nach Anspruch 17 und/oder einer Leseeinheit (6, 8, 10) nach Anspruch 18.

20. Verfahren zur Herstellung eines Schaltermoduls (2), insbesondere eines Schaltermoduls (2) nach mindestens einem der vorhergehenden Ansprüche, **gekennzeichnet durch** die folgenden Verfahrensschritte:
es wird eine Leseeinheit (6, 8, 10) bereitgestellt,
es wird ein Schalter (12, 14, 16) oder ein Anzeigeelement mit einer Speichereinheit (32, 34, 36) mit spezifischen Daten bereitgestellt,- der Schalter (12, 14, d 16) oder das Anzeigeelement wird relativ zur Leseeinheit -(6, 8, 10) positioniert,
der Schalter (12, 14, 16) oder das Anzeigeelement wird mit Hilfe der Leseeinheit (6, 8, 10) **durch** Auslesen der Daten der Speichereinheit (32, 34, 36) identifiziert.
